# EUROPÄISCHE PATENTSCHRIFT

(11) **EP 4 211 781 B1**
(45) Veröffentlichungstag und Bekanntmachung des Hinweises auf die Patenterteilung: **31.07.2024**
(21) Anmeldenummer: 21765958.0
(22) Anmeldetag: 02.09.2021
(51) Int. Cl.: H02K 7/102

(54) **ELEKTROMOTOR MIT ELEKTROMAGNETISCH BETÄTIGBARER BREMSE**
ELECTRIC MOTOR WITH ELECTRO-MAGNETICCALLY APPLIED BRAKE
MOTOR ÉLECTRIQUE AVEC FREIN À APPLICATION ÉLECTROMAGNÉTIQUE

(30) Priorität: 10.09.2020 DE 102020005540
(43) Veröffentlichungstag der Anmeldung: 19.07.2023
(73) Patentinhaber: SEW-EURODRIVE GmbH & Co. KG, 76646 Bruchsal (DE)
(72) Erfinder: EPSKAMP, Torsten, 75015 Bretten (DE); FICHTNER-PFLAUM, Gerolf, 76703 Kraichtal-Unteröwisheim (DE); STAHL, Alexander, 76131 Karlsruhe (DE)
(86) Internationale Anmeldenummer: PCT/EP2021/074308
(87) Internationale Veröffentlichungsnummer: WO 2022/053398

(56) Entgegenhaltungen:
- DE-A1- 102012 019 415
- DE-B- 1 030 121
- US-A- 2 860 748
- US-A- 4 135 612
- US-A1- 2015 292 580

## Beschreibung

Die Erfindung betrifft einen Elektromotor mit elektromagnetisch betätigbarer Bremse.

Aus der DE 10 2012 019 415 A1 ist als nächstliegender Stand der Technik ein Elektromotor mit elektromagnetisch betätigbarer Bremse bekannt.

Aus der DE 10 2013 016 999 A1 ist eine Bremsanordnung bekannt.

Aus der DE 10 2013 006 605 A1 ist ein Elektromotor mit Bremsanordnung bekannt.

Aus der DE 10 2013 019 615 A1 ist ein Elektromotor mit Bremsanordnung bekannt.

Aus der DE 10 2017 000 845 A1 ist ein Elektromotor mit einer elektromagnetisch betätigbaren Bremsanordnung zum Abbremsen einer Welle bekannt.

**Aus der** US 4 135 612 A **ist ein Elektromotor mit luftgekühlter Kupplung und Bremse bekannt.**

**Aus der** US 2 860 748 A **ist ein elektrisch gesteuerter Leistungsüberträger bekannt.**

**Aus der** DE 10 30 121 B **ist eine elektromagnetisch betätigte Vorrichtung zum Bremsen von Drehbewegungen bekannt.**

**Aus der** US 2015/292580 A1 **ist eine elektromagnetisch betätigbare Bremse bekannt.**

Der Erfindung liegt daher die Aufgabe zugrunde, einen Elektromotor mit Bremse weiterzubilden, wobei Ressourcen geschont werden sollen.

Erfindungsgemäß wird die Aufgabe bei dem Elektromotor mit elektromagnetisch betätigbarer Bremse nach den in Anspruch 1 angegebenen Merkmalen gelöst.

Wichtige Merkmale der Erfindung bei dem Elektromotor mit elektromagnetisch betätigbarer Bremse sind, dass die Bremse eine in einem Magnetkörper aufgenommene Spule aufweist,
wobei ein Bremsbelagträger mit einer Rotorwelle des Elektromotors drehfest aber axial verschiebbar verbunden ist und eine Ankerscheibe mit dem Magnetkörper drehfest aber axial verschiebbar verbunden ist,
wobei die Ankerscheibe axial zwischen dem Bremsbelagträger und dem Magnetkörper angeordnet ist,
wobei am Magnetkörper abgestützten Federn auf die Ankerscheibe drücken,
wobei ein zweiter Elektromagnet am Magnetkörper angeordnet ist,
wobei ein Hebel zum und/oder am Magnetkörper schwenkbar, insbesondere drehbar, gelagert ist,
wobei der Hebel, insbesondere mittels einer Stange, mit der Ankerscheibe derart verbunden ist, dass in einer ersten Drehstellung des Hebels die Ankerscheibe an den Bremsbelagträger angedrückt ist, insbesondere so, dass die Bremse eingefallen ist, und in einer zweiten, insbesondere zur ersten Drehstellung unterschiedlichen, Drehstellung des Hebels die Ankerscheibe zum Magnetkörper hingezogen gehalten ist, insbesondere so, dass die Bremse gelüftet ist.

Von Vorteil ist dabei, dass mittels des zweiten Elektromagneten und einem entsprechend großen, durch den Hebel erzeugten Kraft die Ankerscheibe vom Bremsbelagträger weggehoben wird, also die Bremse gelüftet wird. Der zweite Elektromagnet unterstützt also den aus der Spule und dem Magnetkörper gebildeten ersten Elektromagneten, der bei Bestromung der Spule die Ankerscheibe ebenfalls wegdrückt vom Bremsbelagträger, insbesondere entgegen der von am Magnetkörper abgestützten Federn erzeugten Federkraft. Auf diese Weise ist einerseits ein schnelles Lüften der Bremse ermöglicht und andererseits nach dem Lüften das Halten des gelüfteten Zustands mit weniger Strom ermöglicht. Vorzugsweise sind die Spule und der Elektromotor, insbesondere also die Wicklung des Elektromotors, parallelgeschaltet, so dass die Bestromung gleichzeitig erfolgt. Statt der Parallelschaltung ist auch eine Serienschaltung, also Reihenschaltung, ermöglicht. Dabei reduziert sich der Strom aufgrund der in Reihe geschalteten Impedanzen, also der Impedanz der Spule und der Wicklung, insbesondere wenn die Versorgungsspannung dieselbe wie bei der genannten Parallelschaltung ist. Infolge des geringen Stromverbrauchs bei langanhaltendem Lüften der Bremse sind große Energiemengen einsparbar, also Ressourcen schonbar und somit die Umwelt schützbar.

Bei einer vorteilhaften Ausgestaltung ist der Hebel auf der von der Ankerscheibe abgewandten Seite des Magnetkörpers angeordnet. Von Vorteil ist dabei, dass die Bremse unverändert am Motor anordenbar ist.

Bei einer vorteilhaften Ausgestaltung verschwindet der Luftabstand zwischen Hebel und einem Spulenkern des zweiten Elektromagneten bei mit elektrischem Strom beaufschlagtem zweiten Elektromagnet oder ist kleiner als der Luftabstand zwischen Hebel und dem Spulenkern des zweiten Elektromagneten bei stromlosem zweiten Elektromagnet. Von Vorteil ist dabei, dass der zweite Elektromagnet den Hebel anzieht, wenn der zweite Elektromagnet bestromt wird. Bei Nicht-Bestromung des zweiten Elektromagneten wird der Hebel vom Federteil zurückgeschwenkt, so dass der Luftabstand zwischen dem Hebel und dem zweiten Elektromagnet vergrößert wird. Bei Bestromung des zweiten Elektromagneten hingegen wird der Hebel zum Spulenkern des zweiten Elektromagneten hingezogen und somit der Luftabstand verringert oder sogar zum Verschwinden gebracht.

Bei einer vorteilhaften Ausgestaltung ist der Hebel mittels einer Lagerung, insbesondere mittels einer direkt oder indirekt am Magnetkörper befestigten Rolle oder mittels eines Zylinderstiftes, drehbar gelagert, wobei die Lagerung am Magnetkörper, insbesondere an der Außenseite des Magnetkörpers, angeordnet ist. Von Vorteil ist dabei, dass der Hebel am Magnetkörper gehalten ist und trotzdem drehbar angeordnet ist. Beispielsweise ist ein Aufliegen des Hebels auf der Rolle oder auf dem Zylinderstift einfach realisierbar.

Bei einer vorteilhaften Ausgestaltung wird der Hebel vom zweiten Elektromagnet in der zweiten Drehstellung gehalten, insbesondere wenn der zweite Elektromagnet mit elektrischem Strom beaufschlagt wird. Von Vorteil ist dabei, dass nur ein geringer Strom notwendig ist, wenn die Windungszahl der Wicklung des zweiten Elektromagneten hoch ist und somit ein genügend starkes Magnetfeld erzeugbar ist. Außerdem ist über die Hebelwirkung eine geringe anziehende Kraft des zweiten Elektromagneten in eine höhere Kraft umsetzbar, die auf die Ankerscheibe wirkt. Hierzu ist der Abstand zwischen der Lagerung des Hebels und dem zweiten Elektromagneten größer als der Abstand zwischen der Lagerung und dem Verbindungsbereich zwischen der Stange und dem Hebel.

Bei einer vorteilhaften Ausgestaltung ist ein Lagerschild des Elektromotors mit dem Magnetkörper, insbesondere fest, insbesondere drehfest und in axialer Richtung fest, verbunden,
wobei in der ersten Drehstellung des Hebels der Bremsbelagträger, insbesondere mit dem dem Lagerschild zugewandten Bremsbelag des Bremsbelagträgers, an eine am Lagerschild ausgebildete Bremsfläche, insbesondere fein bearbeitete Fläche, angedrückt ist. Von Vorteil ist dabei, dass abhängig von der Drehstellung des Hebels der Bremsbelagträger angedrückt ist, also ein Reibkontakt bewirkt ist, oder nicht.

Bei einer vorteilhaften Ausgestaltung ist zwischen dem Lagerschild und einem weiteren Lagerschild ein Gehäuseteil des Elektromotors angeordnet, welches die Statorwicklung umgibt. Von Vorteil ist dabei, dass der Motor einfach und kostengünstig aufgebaut ist.

Bei einer vorteilhaften Ausgestaltung ist ein Lager zur drehbaren Lagerung der Rotorwelle des Elektromotors im Lagerschild aufgenommen. Von Vorteil ist dabei, dass eine einfache und sichere Aufnahme des Lagers bewirkbar ist.

Bei einer vorteilhaften Ausgestaltung ist der vom zweiten Elektromagnet auf die Drehachse der Rotorwelle bezogene Radialabstandsbereich radial außerhalb des vom Magnetkörper überdeckten Radialabstandsbereichs angeordnet. Von Vorteil ist dabei, dass eine große Hebelwirkung erreichbar ist. Somit ist also das Lüften der Bremse mit einem geringen Haltstrom ermöglicht.

Bei einer vorteilhaften Ausgestaltung drückt ein am Magnetkörper abgestütztes Federteil auf den Hebel, insbesondere auf der vom zweiten Elektromagnet abgewandten Seite der Lagerung des Hebels. Von Vorteil ist dabei, dass ein Rückstellmoment einfach und kostengünstig erzeugbar ist. Alternativ ist das Federteil als Zugfeder ausgeführt, die den Hebel zum Magnetkörper hinzieht.

Bei einer vorteilhaften Ausgestaltung ist oder sind der Hebel, die Ankerscheibe und der Magnetkörper aus ferromagnetischem Material gefertigt. Von Vorteil ist dabei, dass durch Materialwahl die anziehende Kraft bestimmbar ist.

Bei einer vorteilhaften Ausgestaltung weist der Bremsbelagträger axial beidseitig jeweils einen Bremsbelag auf. Von Vorteil ist dabei, dass eine verbesserte Reibwirkung erzielbar ist.

Bei einer vorteilhaften Ausgestaltung ist die Stange mit der Ankerscheibe fest verbunden,
wobei die Stange durch eine durch den Magnetkörper durchgehende Ausnehmung hindurchragt,
wobei die Stange mit einem Begrenzungsmittel, insbesondere mit einer auf einen Gewindebereich der Stange aufgeschraubte Mutter, verbunden und von dem Hebel axial begrenzt ist. Von Vorteil ist dabei, dass der zweite Elektromagnet unterstützend wirksam ist, insbesondere wobei der Haltestrom zum dauerhaften Lüften reduzierbar ist und somit auch die damit verbundene Verlustleistung, insbesondere die Ohm'schen Verluste.

Bei einer vorteilhaften Ausgestaltung weist die Stange durch eine Ausnehmung des Hebels hindurchragt und das Begrenzungsmittel auf der von der Ankerscheibe abgewandten Seite des Hebels mit dem Hebel verbunden ist, insbesondere schraubverbunden ist. Von Vorteil ist dabei, dass mittels des Hebels ein Lüften der Bremse unterstützbar ist. Dabei befindet sich der Hebel auf der von der Ankerscheibe abgewandten Seite des Magnetkörpers. Mittels der durch eine durch den Magnetkörper durchgehenden Ausnehmung hindurchragenden Stange ist ein Unterstützen des Lüftens durch den Hebel ermöglicht.

Bei einer vorteilhaften Ausgestaltung ist am Magnetkörper, insbesondere an der von der Ankerscheibe abgewandten Seite des Magnetkörpers, eine Vertiefung ausgeformt, in welcher der Hebel aufnehmbar ist,
insbesondere so, dass der Hebel, insbesondere der lange Hebelarm des Hebels, vom magnetischen Streufluss anziehbar ist, welcher durch die mittels der Vertiefung verdünnte Wandstärke des Magnetkörpers aus dem Magnetkörper hinaustritt. Von Vorteil ist dabei, durch die Verdünnung der Wandstärke, welche am Magnetkörper durch die Vertiefung bewirkt ist, ein erhöhter Streufluss austritt, der dann den langen Hebelarm des Hebels anzieht.

Bei einer vorteilhaften Ausgestaltung ist am Hebel eine Verdickung ausgeformt, die als Drehpunkt des Hebels fungiert,
insbesondere wobei die Verdickung zwischen einem langen Hebelarm und einem kurzen Hebelarm angeordnet ist. Von Vorteil ist dabei, dass die Erfindung mit einer geringen Anzahl von Teilen einfach und kostengünstig realisierbar ist.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von schematischen Abbildungen näher erläutert:
In der Figur 1 ist ein Längsschnitt durch einen erfindungsgemäßen Elektromotor mit gelüfteter Bremse dargestellt.
In der Figur 2 ist der Bereich des Längsschnitts bei eingefallener Bremse dargestellt.
In der Figur 3 ist eine Draufsicht in axialer Richtung, also in Richtung der Rotorwelle des Elektromotors dargestellt.
In der Figur 4 ist für ein anderes Ausführungsbeispiel des Elektromotors ein Schnitt der gelüfteten Bremse dargestellt.
In der Figur 5 ist zu diesem anderen Ausführungsbeispiel ein Schnitt der eingefallenen Bremse dargestellt.
In der Figur 6 ist der Hebel 7 explodiert über dem Magnetkörper 5 dargestellt, so dass eine Vertiefung 50, in welcher der Hebel 7 samt seinem langen Hebelarm 60 und seinem kurzen Hebelarm aufnehmbar ist, freigelegt und gut erkennbar ist.

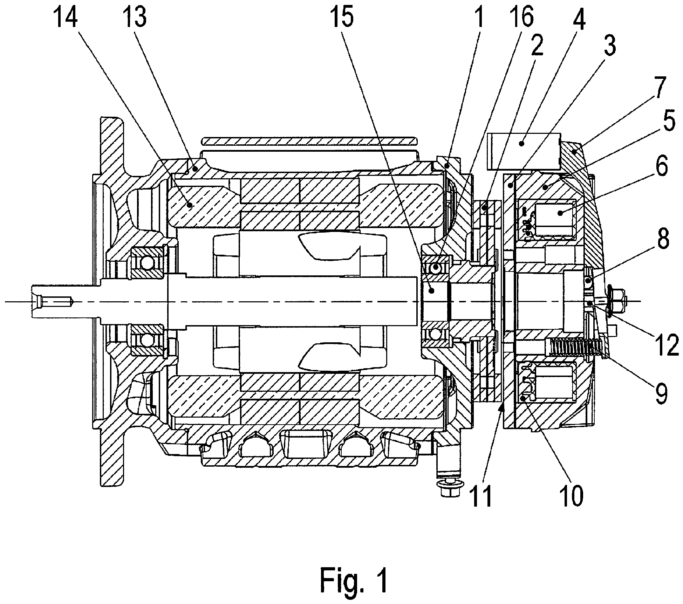

Wie in der Figur 1 gezeigt, weist der Elektromotor eine elektromagnetisch betätigbare Bremse auf.

Eine Rotorwelle 15 des Elektromotors ist über ein in einem Lagerschild 1 aufgenommenes Lager 16 drehbar gelagert.

Das Lagerschild 1 ist mittels Schrauben verbunden mit einem Gehäuseteil 13, welches die Statorwicklung 14 des Elektromotors umgibt. Ein weiteres Lager der Rotorwelle 15 ist in einem weiteren Lagerschild aufgenommen, das ebenfalls mit dem Gehäuseteil 13 verbunden ist. Das Gehäuseteil 13 ist dabei axial zwischen den beiden Lagerschilden angeordnet.

Ein Bremsbelagträger 2 ist drehfest, aber axial bewegbar mit der Rotorwelle 15 verbunden. Hierzu weist der Bremsbelagträger 2 eine Innenverzahnung auf, die auf eine Außenverzahnung der Rotorwelle 15 oder eines mit der Rotorwelle 15 drehfest, insbesondere mittels Passfederverbindung, verbundenen Mitnehmerrings aufgesteckt ist.

Der Bremsbelagträger 2 weist axial beidseitig jeweils einen Bremsbelag auf.

Eine Ankerscheibe 3 ist drehfest, aber axial bewegbar mit einem Magnetkörper 5 verbunden. Vorzugsweise ist die Ankerscheibe 3 aus einem ferromagnetischen Material ausgeführt.

Insbesondere auf der dem Stator zugewandten Seite des Magnetkörpers 5 ist im Magnetkörper 5 eine ringförmige Vertiefung ausgebildet, in welcher eine in einem Spulenträger 10 aufgenommene Spule 6 aufgenommen ist. Die Ringachse der ringförmigen Vertiefung ist koaxial, also identisch zur Drehachse der Rotorwelle, insbesondere also in axialer Richtung ausgerichtet.

Der Magnetkörper 5 ist aus einem ferromagnetischen Material gefertigt.

Der Bremsbelagträger 2 ist axial zwischen dem Lagerschild 1 und dem Magnetkörper 5 angeordnet.

Bei Bestromung der Spule 6 wird die Ankerscheibe 3 entgegen der von am Magnetkörper 5 abgestützten, in den Figuren nicht gezeigten Federn, welche auf die Ankerscheibe 3 drücken, zum Magnetkörper 5 hingedrückt. Somit wird die Bremse gelüftet, da sich der in Figur 1 dargestellte Luftspalt 11 bildet.

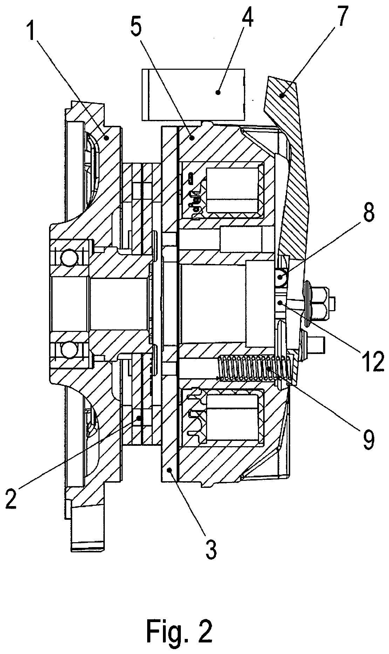

Wie in Figur 2 gezeigt, wird bei Nicht-Bestromung der Spule 6 die Ankerscheibe 3 von den am Magnetkörper 5 von den abgestützten, in den Figuren nicht gezeigten Federn, welche auf die Ankerscheibe 3 drücken, vom Magnetkörper 5 weggedrückt. Somit kommt der auf dem Bremsbelagträger 2 angeordnete, der Ankerscheibe 3 zugewandte Bremsbelag in Reibkontakt mit der Ankerscheibe und der dem Lagerschild 1 zugewandte Bremsbelag des Bremsbelagträgers 2 kommt in Reibkontakt mit einer am Lagerschild 1 ausgebildeten Bremsfläche. Die Bremse ist somit eingefallen.

Ein am Magnetkörper 5 über ein Drehlager 9 drehbar gelagerter Hebel 7 ist aus einem kurzen und einem langen Hebelarm zusammengesetzt, insbesondere einteilig, insbesondere einstückig. Eine an der Ankerscheibe 3 befestigte Stange 12 ist durch eine Ausnehmung des kurzen Hebelarms hindurchgeführt und auf der von dem Elektromotor, insbesondere vom Lagerschild 1, abgewandten Seite kurzen Hebelarms ist eine Mutter auf einen Gewindebereich der Stange aufgeschraubt oder eine andere Verbreiterung der Stange ausgeführt. Somit ist der Hebel 7 axial begrenzt durch die Verbreiterung oder die Mutter.

An einer Umfangsstelle, insbesondere vertikal über der Bremse, ist radial außerhalb des Magnetkörpers 5 ein zweiter Elektromagnet 4 angeordnet, welcher bei seiner Bestromung den langen Hebelarm zu sich hinzieht.

Der Hebel 7 ist vorzugsweise aus einem ferromagnetischem Material gefertigt, insbesondere aus Stahl.

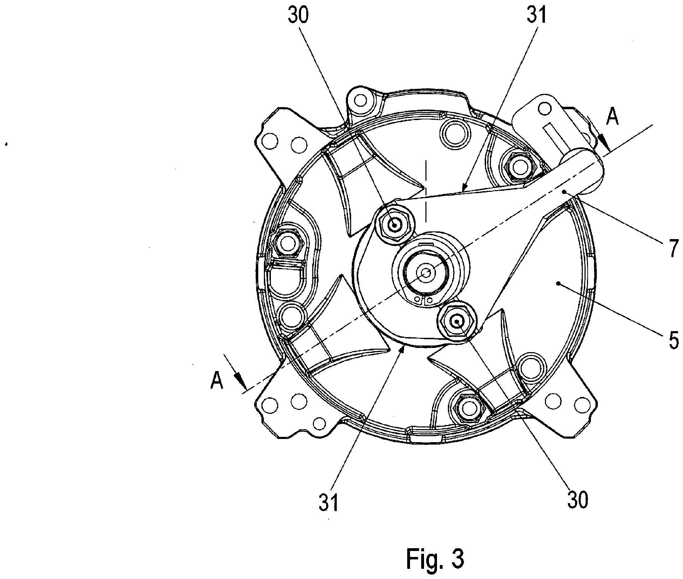

Wie in Figur 3 zusammen mit Figur 1 ersichtlich, überlappt der vom Hebel 7 überdeckte, auf die Drehachse der Rotorwelle bezogene Radialabstandsbereich mit dem von dem zweiten Elektromagnet 4 überdeckten Radialabstandsbereich.

Bei Bestromung des zweiten Elektromagneten 4 wird der Hebel 7 entgegen der von den auf die Ankerscheibe drückenden Federn erzeugten Federkraft zum zweiten Elektromagneten 4 hingezogen, insbesondere, weil auch die Spule 6 bestromt und somit die Ankerscheibe zum Magnetkörper 5 hingezogen wird. Die Anziehungskräfte beider Elektromagnete wirken also gemeinsam derart, dass die Ankerscheibe 3 zum Magnetkörper 5 hin und der lange Hebelarm des Hebels 7 zum zweiten Elektromagneten hingezogen wird. Ebenfalls diese Bewegung stützend drückt das am Magnetkörper 5 abgestützte Federteil 9 auf den kurzen Hebelarm des Hebels 7, so dass der lange Hebelarm zum Magnetkörper 5 hin und auch zum zweiten Elektromagneten 4 hingedrückt wird. Weiter diese Bewegung unterstützend wirkt auch eine besonders dünnwandige Ausführung des Magnetkörpers 5 im Bereich des langen Hebelarms, da somit aus dem Magnetkörper 5 ein Teil des von der Spule 6 erzeugten Magnetfeldes austritt und den langen Hebelarm des Hebels 7 anzieht.

Bei Nicht-Bestromung des zweiten Elektromagneten 4 wird der Hebel 7 von der von den auf die Ankerscheibe 3 drückenden, am Magnetkörper 5 abgestützten Federn erzeugten Federkraft vom zweiten Elektromagneten 4 weggezogen, weil die Ankerscheibe mittels der Stange 12 und der Verbreiterung, insbesondere Mutter, den Hebel 7 zurückzieht. Die vom Federteil 9 erzeugte Federkraft ist betragsmäßig schwächer als die von den Federn erzeugte Federkraft. Das Federteil 9 ist auf der vom zweiten Elektromagneten 4 abgewandten Seite der Lagerung 8 angeordnet.

Der Hebel 7 ragt in eine am Magnetkörper 5 ausgeformte Vertiefung hinein, insbesondere welche die Wandstärke des Magnetkörpers 5 im Bereich zwischen dem Hebel 7 und der Spule 6 verringert.

Die Lagerung 8 ist als runder Bolzen realisierbar, dessen Richtung sich senkrecht zur Hebelrichtung erstreckt. Somit ist die Bolzenrichtung senkrecht zu der Schwenkebene des Hebels 7 ausgerichtet.

Die Wicklungsachse der Spule 6 ist koaxial zur Drehachse der Rotorwelle 15.

Vorzugsweise wird der Hebel 7 bei Bestromung des zweiten Elektromagneten 4 sehr nahe oder bis zur Berührung eines Spulenkerns des zweiten Elektromagnets 4 angezogen.

Die Lagerung 8 ist radial innerhalb des von der Spule 6 überdeckten, auf die Drehachse der Rotorwelle bezogenen Radialabstandsbereichs angeordnet.

Dabei ist der von der Spule 6 erzeugte, dem Hebel 7 zugewandte Magnetpol der Spule 6 gleichartig magnetisiert zu dem von dem zweiten Elektromagnet 4 erzeugten, dem Hebel 7 zugewandten Magnetpol des zweiten Elektromagneten 4. Auf diese Weise wird der Hebel 7 sowohl vom zweiten Elektromagneten 4 angezogen also auch von dem aus dem Magnetkörper 5 austretenden Streufluss, insbesondere welcher trotz der topfförmigen Ausführung des Magnetkörpers 5 aus diesem noch aus der von dem Lagerschild 1 abgewandten Seite des Magnetkörpers 5 austritt.

Der zweite Elektromagnet 4 und die Spule 6 sind elektrisch in Reihe geschaltet, so dass also beide gleichzeitig bestromt sind. Auf diese Weise unterstützen sie sich gegenseitig beim Lüften der Bremse. Denn von der Spule 6 wird die ferromagnetisch ausgeführte Ankerscheibe 3 direkt angezogen und von dem zweiten Elektromagneten 4 wird der Hebel 7 derart angezogen, dass dieser eine Schwenkbewegung ausführt, welche mittels der Stange 12 ebenfalls die Ankerscheibe 3 zum Magnetkörper 5 hinzieht.

Die Schwenkbewegung wird dadurch verursacht, dass der Hebel 7 auf dem Drehlager 9, insbesondere Stift, aufliegt und somit nur der lange Hebelarm zum zweiten Elektromagneten 4 hin angezogen wird. Außerdem drückt das Federteil 9 auf den kurzen Hebelarm des Hebels 7, so dass die Schwenkbewegung unterstützt wird.

Beim anfänglichen Lüften der Bremse wirken somit die Spule 6 und der zweite Elektromanget 4 zusammen. Wenn dann die Ankerscheibe ihre dem Magnetkörper 5 nächstliegende axiale Position erreicht hat, ist nur noch ein Halten der Ankerscheibe 3 auf dieser Position notwendig.

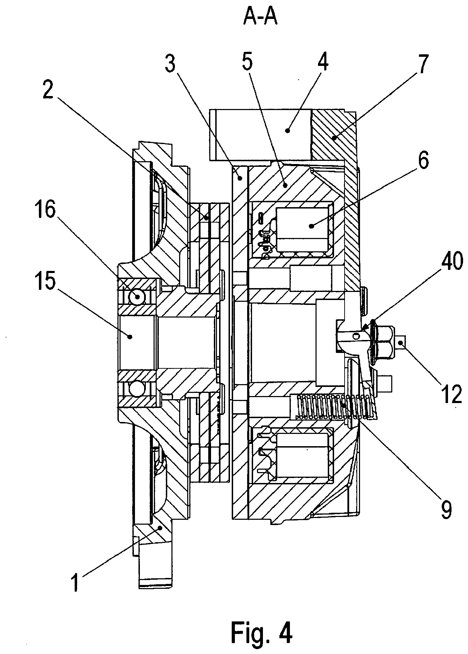

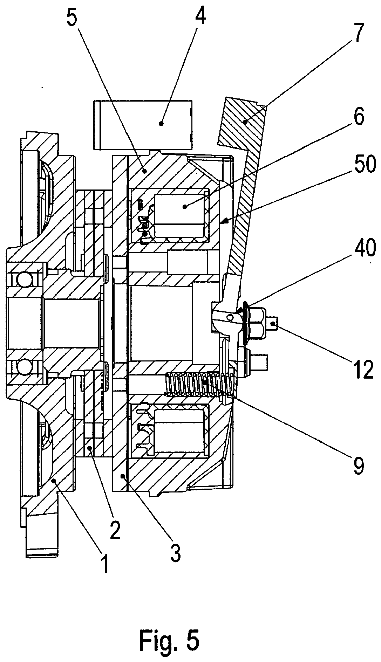

Wie in Figur 4 und 5 dargestellt, ist statt einer separaten, durch beispielsweise einen Stift realisierten Lagerung der Hebel 7 selbst mit einem Drehpunkt ausformbar, der auf dem Magnetkörper 5 aufliegt und somit ein Drehlager bildet.

Die exzentrische Form der als Drehpunkt wirksamen Verdickung des Hebels 7 ermöglicht die Schwenkbewegung, wenn der zweite Elektromagnet 4 bestromt wird und somit den langen Hebelarm des Hebel 7 anzieht sowie das Federteil 9 auf den kurzen Hebelarm des Hebels 7 drückt und die Ankerscheibe 3 zum Magnetkörper hin angezogen wird, insbesondere auf der von dem Hebel 7 abgewandten Seite des Magnetkörpers 5.

Somit rollt der Hebel 7 an der Vertiefung entlang ab, während er die Schwenkbewegung ausführt, die beim Übergang vom gelüfteten Zustand der Bremse zum eingefallenen Zustand der Bremse auftritt.

Der zweite Elektromagnet weist einen mit einem Blechabschnitt ausgeführten Spulenkern auf, wobei der Blechabschnitt mittels einer Schraube mit dem Magnetkörper 5 lösbar verbunden ist.

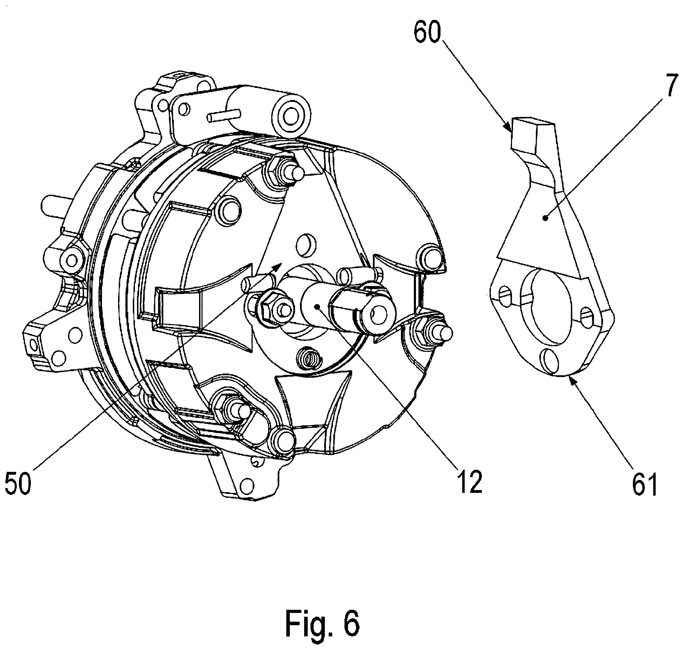

Wie in Figur 6 erkennbar, weist der Magnetkörper 5 eine Vertiefung 50 auf, in welcher der Hebel 7 zumindest teilweise aufnehmbar ist. Insbesondere ist somit am Magnetkörper 5 auch ein Drehlager als Auflager für den Hebel 7 ausbildbar
Bei weiteren erfindungsgemäßen Ausführungsbeispielen wird hierzu ein Abschalten der Spule 6 bei diesem Halten ausgeführt, so dass Verluste reduzierbar sind. Die Haltekraft des zweiten Elektromagneten 4 ist ausreichend.

Das Federteil 9 ist in einer axial gerichteten Bohrung des Magnetkörpers 5 befestigt. Hierzu ist das Federteil 9 mit seinem vom Hebel 7 abgewandten Endbereich formschlüssig mit dem Magnetkörper 5 verbunden. Insbesondere ist die Bohrung durch den Magnetkörper 5 axial durchgehend aber als Stufenbohrung ausgeführt und das vorzugsweise als Ringfeder ausgeführte Federteil an einer Stufe der Stufenbohrung abgestützt.

Bei weiteren erfindungsgemäßen Ausführungsbeispielen wird das Federteil auf der dem zweiten Elektromagnet 4 zugewandten Seite des Hebels 7 angeordnet und somit das Federteil 9 anstatt als Zugfeder als Druckfeder ausgeführt, insbesondere so dass der lange Hebelarm von diesem Federteil 9 dann angezogen wird.

### Bezugszeichenliste

1 Lagerschild
2 Bremsbelagträger
3 Ankerscheibe
4 zweiter Elektromagnet
5 Magnetkörper
6 Spule
7 Hebel
8 Drehlager
9 Federteil
10 Spulenträger
11 Luftspalt
12 Stange
13 Gehäuseteil
14 Statorwicklung
15 Rotorwelle
16 Lager
40 Drehpunkt, insbesondere Verdickung
50 Vertiefung, insbesondere Nut
60 langer Hebelarm
61 kurzer Hebelarm

## Patentansprüche

1. Elektromotor mit elektromagnetisch betätigbarer Bremse,
wobei die Bremse eine in einem Magnetkörper (5) aufgenommene Spule (6) aufweist,
wobei ein Bremsbelagträger (2) mit einer Rotorwelle (15) des Elektromotors drehfest aber axial verschiebbar verbunden ist und eine Ankerscheibe (3) mit dem Magnetkörper drehfest aber axial verschiebbar verbunden ist,
wobei die Ankerscheibe axial zwischen dem Bremsbelagträger und dem Magnetkörper angeordnet ist,
wobei am Magnetkörper abgestützten Federn (9) auf die Ankerscheibe drücken,
**dadurch gekennzeichnet, dass**
ein zweiter Elektromagnet (4) am Magnetkörper (5) angeordnet ist, insbesondere mit dem Magnetkörper lösbar verbunden ist,
wobei ein Hebel (7) zum und/oder am Magnetkörper schwenkbar, insbesondere drehbar, gelagert ist,
wobei der Hebel, insbesondere mittels einer Stange (12), mit der Ankerscheibe derart verbunden ist, dass in einer ersten Drehstellung des Hebels die Ankerscheibe an den Bremsbelagträger angedrückt ist, insbesondere so, dass die Bremse eingefallen ist, und in einer zweiten, insbesondere zur ersten Drehstellung unterschiedlichen, Drehstellung des Hebels die Ankerscheibe zum Magnetkörper hingezogen gehalten ist, insbesondere so dass die Bremse gelüftet ist.

2. Elektromotor nach Anspruch 1,
**dadurch gekennzeichnet, dass**
der Hebel (7) auf der von der Ankerscheibe abgewandten Seite des Magnetkörpers (5) angeordnet ist
und/oder dass
der Luftabstand zwischen Hebel und einem Spulenkern des zweiten Elektromagneten (4) bei mit elektrischem Strom beaufschlagtem zweiten Elektromagnet verschwindet oder kleiner ist als der Luftabstand zwischen Hebel und dem Spulenkern des zweiten Elektromagneten bei stromlosem zweiten Elektromagnet.

3. Elektromotor nach einem der vorangegangenen Ansprüche,
**dadurch gekennzeichnet, dass**
der Hebel mittels einer Lagerung (8), insbesondere mittels einer direkt oder indirekt am Magnetkörper (5) befestigten Rolle oder mittels eines Zylinderstiftes oder einer am Hebel ausgeformten Verdickung, drehbar gelagert ist, wobei die Lagerung am Magnetkörper, insbesondere an der Außenseite des Magnetkörpers, angeordnet ist und/oder am Hebel.

4. Elektromotor nach einem der vorangegangenen Ansprüche,
**dadurch gekennzeichnet, dass**
der Hebel (7) vom zweiten Elektromagnet (4) in der zweiten Drehstellung gehalten wird, insbesondere wenn der zweite Elektromagnet mit elektrischem Strom beaufschlagt wird.

5. Elektromotor nach einem der vorangegangenen Ansprüche,
**dadurch gekennzeichnet, dass**
ein Lagerschild (1) des Elektromotors mit dem Magnetkörper (5), insbesondere fest, insbesondere drehfest und in axialer Richtung fest, verbunden ist,
wobei in der ersten Drehstellung der Bremsbelagträger (2), insbesondere mit dem dem Lagerschild (1) zugewandten Bremsbelag des Bremsbelagträgers, an eine am Lagerschild ausgebildete Bremsfläche, insbesondere fein bearbeitete Fläche, angedrückt ist.

6. Elektromotor nach einem der vorangegangenen Ansprüche,
**dadurch gekennzeichnet, dass**
zwischen dem Lagerschild (1), also erstem Lagerschild, und einem weiteren Lagerschild ein Gehäuseteil (13) des Elektromotors angeordnet ist, welches die Statorwicklung (14) umgibt.

7. Elektromotor nach einem der vorangegangenen Ansprüche,
**dadurch gekennzeichnet, dass**
ein Lager ; (16) zur drehbaren Lagerung der Rotorwelle des Elektromotors im ersten Lagerschild (1) aufgenommen ist.

8. Elektromotor nach einem der vorangegangenen Ansprüche,
**dadurch gekennzeichnet, dass**
der vom zweiten Elektromagnet (4) auf die Drehachse der Rotorwelle bezogene Radialabstandsbereich radial außerhalb des vom Magnetkörper (5) überdeckten Radialabstandsbereichs angeordnet ist.

9. Elektromotor nach einem der vorangegangenen Ansprüche,
**dadurch gekennzeichnet, dass**
ein am Magnetkörper (5) abgestütztes Federteil (9) auf den Hebel (7) drückt, insbesondere auf der vom zweiten Elektromagnet abgewandten Seite der Lagerung des Hebels.

10. Elektromotor nach einem der vorangegangenen Ansprüche,
**dadurch gekennzeichnet, dass**
der Hebel (7), die Ankerscheibe (3) und der Magnetkörper (5) aus ferromagnetischem Material gefertigt ist oder sind.

11. Elektromotor nach einem der vorangegangenen Ansprüche,
**dadurch gekennzeichnet, dass**
der Bremsbelagträger (2) axial beidseitig jeweils einen Bremsbelag aufweist.

12. Elektromotor nach einem der vorangegangenen Ansprüche,
**dadurch gekennzeichnet, dass**
die Stange (12) mit der Ankerscheibe (3) fest verbunden ist,
wobei die Stange durch eine durch den Magnetkörper (5) durchgehende Ausnehmung hindurchragt,
wobei die Stange mit einem Begrenzungsmittel, insbesondere mit einer auf einen Gewindebereich der Stange aufgeschraubte Mutter, verbunden und von dem Hebel (7) Z axial begrenzt ist.

13. Elektromotor nach einem der vorangegangenen Ansprüche,
**dadurch gekennzeichnet, dass**
die Stange (12) durch eine Ausnehmung des Hebels (7) hindurchragt und das Begrenzungsmittel auf der von der Ankerscheibe (3) abgewandten Seite des Hebels mit dem Hebel verbunden ist, insbesondere schraubverbunden ist.

14. Elektromotor nach einem der vorangegangenen Ansprüche,
**dadurch gekennzeichnet, dass**
am Magnetkörper (5) insbesondere an der von der Ankerscheibe (3) abgewandten Seite des Magnetkörpers, eine Vertiefung (50) ausgeformt ist, in welcher der Hebel (7) aufnehmbar ist, insbesondere so, dass der Hebel (7), insbesondere der lange Hebelarm des Hebels, vom magnetischen Streufluss anziehbar ist, welcher durch die mittels der Vertiefung verdünnte Wandstärke des Magnetkörpers aus dem Magnetkörper hinaustritt.

15. Elektromotor nach einem der vorangegangenen Ansprüche,
**dadurch gekennzeichnet, dass**
am Hebel (7) eine Verdickung ausgeformt ist, die als Drehpunkt des Hebels fungiert, insbesondere wobei die Verdickung zwischen einem langen Hebelarm und einem kurzen Hebelarm angeordnet ist.

## Claims

1. An electric motor with an electromagnetically actuatable brake,
wherein the brake has a coil (6) received in a magnet body (5),
wherein a brake lining carrier (2) is connected non-rotatably but axially displaceably to a rotor shaft (15) of the electric motor and an armature disc (3) is connected non-rotatably but axially displaceably to the magnet body,
wherein the armature disc is arranged axially between the brake lining carrier and the magnet body,
wherein springs (9) supported on the magnet body press on the armature disc,
**characterised in that**
a second electromagnet (4) is arranged on the magnet body (5), in particular is connected detachably to the magnet body,
wherein a lever (7) is mounted pivotably, in particular rotatably, in relation to and/or on the magnet body,
wherein the lever, in particular by means of a rod (12), is connected to the armature disc such that in a first rotary position of the lever the armature disc is pressed against the brake lining carrier, in particular such that the brake is applied, and in a second rotary position, in particular one different from the first rotary position, of the lever the armature disc is held drawn towards the magnet body, in particular such that the brake is released.

2. An electric motor according to claim 1,
**characterised in that**
the lever (7) is arranged on that side of the magnet body (5) which faces away from the armature disc
and/or **in that**
the air clearance between the lever and a coil core of the second electromagnet (4), when the second electromagnet is supplied with electric current, disappears or is smaller than the air clearance between the lever and the coil core of the second electromagnet when the second electromagnet is de-energised.

3. An electric motor according to one of the preceding claims,
**characterised in that**
the lever is rotatably mounted by means of a mounting (8), in particular by means of a roller fastened directly or indirectly to the magnet body (5) or by means of a cylindrical pin or a thickened area formed on the lever, wherein the mounting is arranged on the magnet body, in particular on the outer side of the magnet body, and/or on the lever.

4. An electric motor according to one of the preceding claims,
**characterised in that**
the lever (7) is held in the second rotary position by the second electromagnet (4),
in particular if the second electromagnet is supplied with electric current.

5. An electric motor according to one of the preceding claims,
**characterised in that**
an end shield (1) of the electric motor is connected to the magnet body (5), in particular fixedly, in particular non-rotatably and fixedly in the axial direction,
with in the first rotary position the brake lining carrier (2), in particular with that brake lining of the brake lining carrier which faces the end shield (1), being pressed against a braking surface formed on the end shield, in particular a finish-machined face.

6. An electric motor according to one of the preceding claims,
**characterised in that**
between the end shield (1), i.e. first end shield, and a further end shield there is arranged a housing part (13) of the electric motor which surrounds the stator winding (14).

7. An electric motor according to one of the preceding claims,
**characterised in that**
a bearing (16) for rotatably mounting the rotor shaft of the electric motor is received in the first end shield (1).

8. An electric motor according to one of the preceding claims,
**characterised in that**
the radial clearance region from the second electromagnet (4) relative to the axis of rotation of the rotor shaft is arranged radially outside the radial clearance region covered by the magnet body (5).

9. An electric motor according to one of the preceding claims,
**characterised in that**
a spring part (9) supported on the magnet body (5) presses on the lever (7), in particular on that side of the mounting of the lever which faces away from the second electromagnet.

10. An electric motor according to one of the preceding claims,
**characterised in that**
the lever (7), the armature disc (3) and the magnet body (5) is or are manufactured from ferromagnetic material.

11. An electric motor according to one of the preceding claims,
**characterised in that**
the brake lining carrier (2) has one brake lining each axially on either side.

12. An electric motor according to one of the preceding claims,
**characterised in that**
the rod (12) is connected fixedly to the armature disc (3),
with the rod protruding through a cutout passing through the magnet body (5),
with the rod being connected to a limiting means, in particular to a nut screwed onto a threaded region of the rod, and being axially limited by the lever (7).

13. An electric motor according to one of the preceding claims,
**characterised in that**
the rod (12) protrudes through a cutout in the lever (7) and the limiting means is connected, in particular is screw-connected, to the lever on that side of the lever which faces away from the armature disc (3).

14. An electric motor according to one of the preceding claims,
**characterised in that**
on the magnet body (5), in particular on that side of the magnet body which faces away from the armature disc (3), there is formed a depression (50) in which the lever (7) can be received,
in particular such that the lever (7), in particular the long lever arm of the lever, can be attracted by the magnetic leakage flux which escapes from the magnet body through the wall thickness of the magnet body which is thinned by means of the depression.

15. An electric motor according to one of the preceding claims,
**characterised in that**
on the lever (7) there is formed a thickened area which functions as the pivot point of the lever,
in particular with the thickened area being arranged between a long lever arm and a short lever arm.

## Revendications

1. Moteur électrique avec frein à actionnement électromagnétique,
où le frein présente une bobine (6) logée dans un corps magnétique (5),
où un support de garniture de frein (2) est relié à un arbre de rotor (15) du moteur électrique de manière solidaire en rotation mais également de manière à pouvoir coulisser axialement et un disque d'induit (3) est relié au corps magnétique de manière solidaire en rotation mais également de manière à pouvoir coulisser axialement,
où le disque d'induit est agencé de manière axiale entre le support de garniture de frein et le corps magnétique,
où des ressorts (9) supportés au niveau du corps magnétique pressent sur le disque d'induit,
**caractérisé en ce que**
un second électroaimant (4) est agencé au niveau du corps magnétique (5), en particulier est relié de manière amovible au corps magnétique,
où un levier (7) est monté pivotant, en particulier rotatif, par rapport au, et/ou au niveau du, corps magnétique,
où le levier est relié au disque d'induit, en particulier au moyen d'une tige (12), de telle manière que, dans une première position de rotation du levier, le disque d'induit est pressé contre le support de garniture de frein, en particulier de sorte que le frein est mis en prise, et, dans une seconde position de rotation du levier, en particulier différente de la première position de rotation, le disque d'induit est maintenu écarté du corps magnétique, en particulier de sorte que le frein est desserré.

2. Moteur électrique selon la revendication 1,
**caractérisé en ce que**
le levier (7) est agencé sur le côté du corps magnétique (5) qui se détourne du disque d'induit
et/ou **en ce que**
la distance d'air entre le levier et un noyau de bobine du second électro-aimant (4) lorsque le second électro-aimant est sous tension disparaît ou est inférieure à la distance d'air entre le levier et le noyau de bobine du second électro-aimant lorsque le second électro-aimant est hors tension.

3. Moteur électrique selon l'une quelconque des revendications précédentes,
**caractérisé en ce que**
le levier est monté rotatif au moyen d'un palier (8), en particulier au moyen d'un rouleau fixé directement ou indirectement au corps magnétique (5) ou au moyen d'une tige cylindrique ou d'un renflement formé au niveau du levier, le palier étant agencé au niveau du corps magnétique, en particulier sur le côté extérieur du corps magnétique, et/ou au niveau du levier.

4. Moteur électrique selon l'une quelconque des revendications précédentes,
**caractérisé en ce que**
le levier (7) est maintenu dans la seconde position de rotation par le second électroaimant (4), en particulier lorsque le second électroaimant est alimenté en courant électrique.

5. Moteur électrique selon l'une quelconque des revendications précédentes,
**caractérisé en ce que**
une flasque de palier (1) du moteur électrique est reliée au corps magnétique (5), en particulier de manière fixe, en particulier de manière solidaire en rotation et de manière fixe dans la direction axiale,
où, dans la première position de rotation, le support de garniture de frein (2), en particulier avec la garniture de frein, tournée vers la flasque de palier (1), du support de garniture de frein, est pressé contre une surface de freinage, en particulier une surface finement usinée, formée sur la flasque de palier.

6. Moteur électrique selon l'une quelconque des revendications précédentes,
**caractérisé en ce que**
une partie de boîtier (13), entourant l'enroulement statorique (14), du moteur électrique est agencée entre la flasque de palier (1), à savoir la première flasque de palier, et une autre flasque de palier.

7. Moteur électrique selon l'une quelconque des revendications précédentes,
**caractérisé en ce que**
un palier (16) permettant un montage rotatif de l'arbre de rotor du moteur électrique est logé dans la première flasque de palier (1).

8. Moteur électrique selon l'une quelconque des revendications précédentes,
**caractérisé en ce que**
la région de distance radiale liée à l'axe de rotation de l'arbre du rotor par le second électroaimant (4) est agencée de manière radiale à l'extérieur de la région de distance radiale recouverte par le corps magnétique (5).

9. Moteur électrique selon l'une quelconque des revendications précédentes,
**caractérisé en ce que**
une partie ressort (9) supportée au niveau du corps magnétique (5) appuie sur le levier (7), en particulier sur le côté du palier du levier qui se détourne du second électroaimant.

10. Moteur électrique selon l'une quelconque des revendications précédentes,
**caractérisé en ce que**
le levier (7), le disque d'induit (3) et le corps magnétique (5) est ou sont en matériau ferromagnétique.

11. Moteur électrique selon l'une quelconque des revendications précédentes,
**caractérisé en ce que**
le support de garniture de frein (2) présente une garniture de frein de manière axiale et bilatérale.

12. Moteur électrique selon l'une quelconque des revendications précédentes,
**caractérisé en ce que**
la tige (12) est reliée de manière fixe au disque d'induit (3),
où la tige traverse un évidement traversant le corps magnétique (5),
où la tige est reliée à un moyen de limitation, en particulier à un écrou vissé sur une région filetée de la tige, et est délimitée de manière axiale par le levier (7).

13. Moteur électrique selon l'une quelconque des revendications précédentes,
**caractérisé en ce que**
la tige (12) traverse un évidement du levier (7) et le moyen de limitation est relié, en particulier est relié par vissage, au levier sur le côté du levier qui se détourne du disque d'induit (3).

14. Moteur électrique selon l'une quelconque des revendications précédentes,
**caractérisé en ce que**
un renfoncement (50) au sein duquel le levier (7) peut être accueilli est formé au niveau du corps magnétique (5), en particulier sur le côté du corps magnétique qui se détourne du disque d'induit (3), en particulier de sorte que le levier (7), en particulier le bras de levier long du levier, peut être attiré par le flux de fuite magnétique qui sort du corps magnétique en raison de l'épaisseur de paroi, amincie par le renfoncement, du corps magnétique.

15. Moteur électrique selon l'une quelconque des revendications précédentes,
**caractérisé en ce que**
un renflement faisant office de pivot du levier est formé au niveau du levier (7), ledit renflement étant en particulier agencé entre un bras de levier long et un bras de levier court.
